# EUROPEAN PATENT APPLICATION

(11) **EP 3 089 400 A1**
(43) Date of publication of application: **02.11.2016**
(21) Application number: 14791252.1
(22) Date of filing: 09.06.2014
(51) Int. Cl.: H04L 12/24

(54) **OPTICAL NETWORK UNIT (ONU) DATA PROCESSING METHOD, DEVICE AND SYSTEM**

(30) Priority: 27.12.2013 CN 201310737739
(71) Applicant: ZTE Corporation, Shenzhen, Guangdong 518057 (CN)
(72) Inventor: ZHANG, Zhikun, Shenzhen Guangdong 518057 (CN); GUO, Hongjian, Shenzhen Guangdong 518057 (CN); LI, Qing, Shenzhen Guangdong 518057 (CN)
(74) Representative: Novagraaf Technologies
(86) International application number: PCT/CN2014/079538
(87) International publication number: WO 2014/177111

(57) **Abstract**

The present disclosure provides a method, device and system for processing Optical Network Unit (ONU) data. The method includes that: a network management system organizes data used for processing an ONU into an ONU data packet; and the network management system sends the ONU data packet to an Optical Line Terminal (OLT), wherein the OLT sends the received ONU data packet to the ONU. By means of the method, the problem in the relevant art that the management of the ONU is limited by certain factors, including a type factor, a state factor indicative of whether the ONU is online, and a version upgrade factor, is solved, thereby achieving the effect of performing data processing without needing to specially establish a relevant management channel between the network management system and the ONU, without needing to consider whether the ONU is online, and without needing to frequently upgrade the involved OLT.

## Description

### Technical Field

The present disclosure relates to the field of communications, and in particular to a method, device and system for processing Optical Network Unit (ONU) data.

### Background

A Passive Optical Network (PON) technology has become a preferred technology in the field of optical access networks at present, and has obvious advantages in terms of access rate, bandwidth efficiency, splitting ratio, full-service carrying capacity and safety. The PON technology includes an Ethernet Passive Optical Network (EPON) technology and a Gigabit Passive Optical Network (GPON) technology, the EPON technology is standardized by an Institute of Electrical and Electronic Engineers (IEEE) 802.3 Ethernet for the First Mile (EFM) working sector, and the GPON technology is proposed and standardized by an International Telecommunication Union Telecommunication Standardization Sector (ITU-T).

An ONU is remotely managed by a network management system at present by using two main modes as follows. The first mode refers to that: the network management system issues data to an Optical Line Terminal (OLT) via a Simple Network Management Protocol (SNMP); for the EPON technology, after receiving management data, the OLT packages these data into an Operations, Administration and Maintenance (OAM) frame, and sends the data to the ONU; and for the GPON technology, a management object is set by a Managed Entity (ME) defined by a relevant standard of the ITU-T, and ONU management data is transmitted by an ONT Management and Control Interface (OMCI) frame. The second mode refers to that: a management channel between the network management system and the OLT and a management channel between the OLT and the ONU are established so as to finally establish a management channel between the network management system and the ONU, the network management system then directly manages the ONU via the SNMP, and the OLT merely provides a channel and does not process data.

The problems of the first mode are as follows. As various new requirements for applications on PON terminal in engineering are continuously changed and increased, a period of publishing the version of the OLT cannot follow a change frequency of requirements, it is necessary to perfect standards for the new requirements, and it takes a long time to change and perfect the standards. In addition, upgrading of the version of the OLT is heavily influenced, and the version is difficult to frequently upgrade. Thus, an ability of the first mode to respond to the new requirements is poor.

According to the second mode, the new requirements can be met merely by upgrading the network management system and the ONU without needing to upgrade the version of the OLT. However, the second mode also has some problems as follows. Firstly, the second mode is merely applicable to ONUs of non-user families such as a Multiple Dwelling Unit (MDU), and ONUs of user families such as a Simple Family Unit (SFU) may merely adopt the first mode. In addition, merely an online ONU can be managed since merely the online ONU can establish the management channel, thereby increasing the limitations to the management of the ONU.

Consequently, the management of the ONU is limited by certain factors, including a type factor, a state factor indicative of whether the ONU is online, and a version upgrade factor in the relevant art.

### Summary

The present disclosure provides a method, device and system for processing ONU data, which are intended to solve the problem in the relevant art that the management of an ONU is limited by certain factors, including a type factor, a state factor indicative of whether the ONU is online, and a version upgrade factor.

According to one aspect of the present disclosure, a method for processing Optical Network Unit, ONU data is provided, comprising: organizing, by a network management system, data used for processing an ONU into an ONU data packet; and sending, by the network management system, the ONU data packet to an Optical Line Terminal, OLT, wherein the OLT sends the received ONU data packet to the ONU.

In an example embodiment of the present disclosure, the ONU data packet comprises at least one of: a configuration command data packet for a configuration operation, and a query command data packet for a query operation.

According to an aspect of the present disclosure, a method for processing Optical Network Unit, ONU, data is provided, comprising: receiving, by an Optical Line Terminal, OLT, an ONU data packet sent by a network management system and used for processing an ONU; and sending, by the OLT, the received ONU data packet to the ONU.

In an example embodiment of the present disclosure, before sending, by the OLT, the received ONU data packet to the ONU, further comprising: detecting, by the OLT, whether the ONU is online; and sending, by the OLT, the received ONU data packet to the ONU when a detecting result is that the ONU is online.

In an example embodiment of the present disclosure, sending, by the OLT, the received ONU data packet to the ONU comprises: judging, by the OLT, whether the received ONU data packet is a configuration command data packet for a configuration operation or a query command data packet for a query operation; when the ONU data packet is the configuration command data packet, storing, by the OLT, the received configuration command data packet, and sending, by the OLT, the configuration command data packet to the ONU; and/or, when the ONU data packet is the query command data packet, sending, by the OLT, the query command data packet to the ONU.

According to another aspect of the present disclosure, a method for processing Optical Network Unit, ONU, data is provided, comprising: receiving, by an ONU, an ONU data packet sent by an Optical Line Terminal, OLT, wherein the ONU data packet is sent by a network management system and used for processing the ONU; and performing, by the ONU, data processing according to the received ONU data packet.

In an example embodiment of the present disclosure, before performing, by the ONU, data processing according to the received ONU data packet, further comprising: parsing, by the ONU, the received ONU data packet according to a pre-negotiation with the network management system; and performing, by the ONU, data processing according to a parsing result when it is determined that the ONU data packet is parsed successfully.

In an example embodiment of the present disclosure, wherein performing, by the ONU, data processing according to the received ONU data packet comprises: judging, by the ONU, whether the received ONU data packet is a configuration command data packet for a configuration operation or a query command data packet for a query operation; executing, by the ONU, the configuration operation according to the configuration command data packet when the ONU data packet is the configuration command data packet; and/or, executing, by the ONU, the query operation according to the query command data packet when the ONU data packet is the query command data packet.

In an example embodiment of the present disclosure, after performing, by the ONU, data processing according to the received ONU data packet, further comprising: feeding back, by the ONU, configuration result information obtained by a execution of the configuration operation, and/or query result information obtained by a execution of the query operation to the network management system, wherein the configuration result information and/or the query result information received from the ONU are transparently transmitted by the OLT to the network management system.

According to another aspect of the present disclosure, a device for processing Optical Network Unit, ONU, data is provided, located in a network management system, comprising: a organizing component, configured to organize data used for processing an ONU into an ONU data packet; and a first sending component, configured to send the ONU data packet to an Optical Line Terminal, OLT, wherein the OLT sends the received ONU data packet to the ONU.

According to another aspect of the present disclosure, a device for processing Optical Network Unit, ONU data is provided, located in an Optical Line Terminal, OLT, comprising: a first receiving component, configured to receive an ONU data packet sent by a network management system and used for processing an ONU; and a second sending component, configured to send the received ONU data packet to the ONU.

In an example embodiment of the present disclosure, the device further comprising: a detecting component, configured to detect whether the ONU is online, and send the received ONU data packet to the ONU by the OLT when a detecting result is that the ONU is online.

In an example embodiment of the present disclosure, the second sending component comprises: a first judging element, configured to judge whether the received ONU data packet is a configuration command data packet for a configuration operation or a query command data packet for a query operation; a first sending element, configured to store the received configuration command data packet by the OLT and send the configuration command data packet to the ONU when the ONU data packet is the configuration command data packet; and/or, a second sending element, configured to send the query command data packet to the ONU by the OLT when the ONU data packet is the query command data packet.

According to another aspect of the present disclosure, a device for processing Optical Network Unit, ONU, data is provided, located in an ONU, comprising: a second receiving component, configured to receive an ONU data packet sent by an Optical Line Terminal, OLT, wherein the ONU data packet is sent by a network management system and used for processing the ONU; and a processing component, configured to perform data processing according to the received ONU data packet.

In an example embodiment of the present disclosure, the device further comprising: a parsing component, configured to parse the received ONU data packet according to a pre-negotiation with the network management system; and perform data processing by the ONU according to a parsing result when it is determined that the ONU data packet is parsed successfully.

In an example embodiment of the present disclosure, the processing component comprises: a second judging element, configured to judge whether the received ONU data packet is a configuration command data packet for a configuration operation or a query command data packet for a query operation; a first processing element, configured to execute the configuration operation according to the configuration command data packet when the ONU data packet is the configuration command data packet; and/or, a second processing element, configured to execute the query operation according to the query command data packet when the ONU data packet is the query command data packet.

In an example embodiment of the present disclosure, the device further comprising: a feedback component, configured to feed back configuration result information obtained by a execution of the configuration operation, and/or query result information obtained by a execution of the query operation to the network management system, wherein the configuration result information and/or the query result information received from the ONU are transparently transmitted by the OLT to the network management system.

According to aspect of the present disclosure, a system for processing Optical Network Unit, ONU data is provided, including: an ONU data processing device located in a network management system, an ONU data processing device located in an OLT according to any one of the above contents and an ONU data processing device located in an ONU according to any one of the above contents.

By means of the present disclosure, a network management system organizes an ONU data packet by using data used for processing the ONU; and the network management system sends the ONU data packet to an OLT, wherein the OLT sends the received ONU data packet to the ONU. The problem in the relevant art that the management of the ONU is limited by certain factors, including a type factor, a state factor indicative of whether the ONU is online, and a version upgrade factor, is solved, thereby achieving the effect of performing data processing without needing to specially establish a relevant management channel between the network management system and the ONU, without needing to consider whether the ONU is online, and without needing to frequently upgrade the involved OLT.

### Brief Description of the Drawings

The drawings described here are intended to provide further understanding of the present disclosure, and form a part of the present disclosure. The schematic embodiments and descriptions of the present disclosure are intended to explain the present disclosure, and do not form improper limits to the present disclosure. In the drawings:
Fig. 1 is a flowchart of a first method for processing ONU data according to an embodiment of the present disclosure;
Fig. 2 is a flowchart of a second method for processing ONU data according to an embodiment of the present disclosure;
Fig. 3 is a flowchart of a third method for processing ONU data according to an embodiment of the present disclosure;
Fig. 4 is a structure diagram of a first device for processing ONU data according to an embodiment of the present disclosure;
Fig. 5 is a structure diagram of a second device for processing ONU data according to an embodiment of the present disclosure;
Fig. 6 is an example structure diagram of the second device for processing the ONU data according to an embodiment of the present disclosure;
Fig. 7 is an example structure diagram of the second sending component 54 in the second device for processing the ONU data according to an embodiment of the present disclosure;
Fig. 8 is a structure diagram of a third device for processing ONU data according to an embodiment of the present disclosure;
Fig. 9 is an example structure diagram of the third device for processing the ONU data according to an embodiment of the present disclosure;
Fig. 10 is an example structure diagram of the processing component 84 in the third device for processing the ONU data according to an embodiment of the present disclosure;
Fig. 11 is a second example structure diagram of the third device for processing the ONU data according to an embodiment of the present disclosure;
Fig. 12 is a structure diagram of a system for processing an ONU data according to an embodiment of the present disclosure; and
Fig. 13 is a flowchart of remote management of an ONU via a network management system according to an example implementation mode of the present disclosure.

### Detailed Description of the Embodiments

The present disclosure is described in detail below with reference to the drawings and the embodiments. It is important to note that the embodiments of the present disclosure and the characteristics in the embodiments can be combined under the condition of no conflicts.

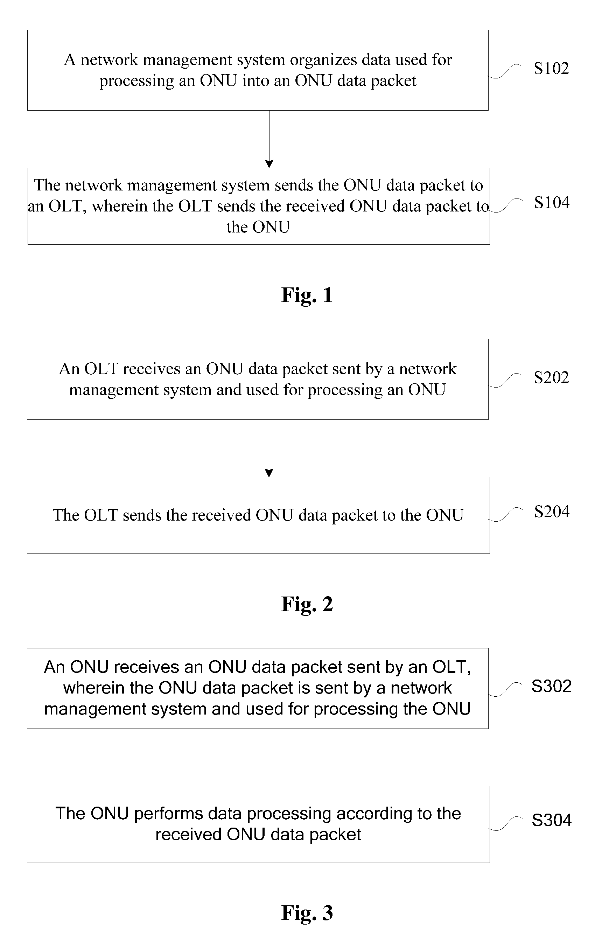

In an embodiment, a method for processing ONU data is provided. Fig. 1 is a flowchart of a first method for processing ONU data according to an embodiment of the present disclosure. As shown in Fig. 1, the flow includes the steps as follows.

Step S102: A network management system organizes an ONU data packet by using data used for processing an ONU, wherein the ONU data packet may be different according to a functional difference. For example, the ONU data packet may be at least one of: a configuration command data packet for a configuration operation and a query command data packet for a query operation.

Step S104: The network management system sends the ONU data packet to an OLT, wherein the OLT sends the received ONU data packet to the ONU.

By means of the steps, the network management system organizes the ONU data packet by using the data used for processing the ONU, and the network management system sends the ONU data packet to the ONU on the basis of a basic connection between the network management system and the OLT and a basic connection between the OLT and the ONU. Compared with the relevant art in which it is necessary to establish a specific management channel when the network management system manages the ONU, the method has the advantages that the problem in the relevant art that the management of the ONU is limited by certain factors, including a type factor, a state factor indicative of whether the ONU is online, and a version upgrade factor, is solved, thereby achieving the effect of performing data processing without needing to specially establish a relevant management channel between the network management system and the ONU, without needing to consider whether the ONU is online, and without needing to frequently upgrade the involved OLT.

In an embodiment, a method for processing ONU data is further provided. Fig. 2 is a flowchart of a second method for processing ONU data according to an embodiment of the present disclosure. As shown in Fig. 2, the flow includes the steps as follows.

Step S202: An OLT receives an ONU data packet sent by a network management system and used for processing an ONU.

Step S204: The OLT sends the received ONU data packet to the ONU.

The OLT sends the ONU data packet sent by the network management system and used for processing the ONU on the basis of a basic connection between the network management system and the OLT and a basic connection between the OLT and the ONU. Compared with the relevant art in which it is necessary to establish a specific management channel when the network management system manages the ONU, the method has the advantages that the problem in the relevant art that the management of the ONU is limited by certain factors, including a type factor, a state factor indicative of whether the ONU is online, and a version upgrade factor, is solved, thereby achieving the effect of performing data processing without needing to specially establish a relevant management channel between the network management system and the ONU, without needing to consider whether the ONU is online, and without needing to frequently upgrade the involved OLT.

Before the OLT sends the received ONU data packet to the ONU, compared with the relevant art in which it is necessary to control a management channel for the ONU data packet or upgrade the OLT, the OLT merely needs to detect whether the ONU is online, and when it is determined that the ONU is online, the OLT sends the received ONU data packet to the ONU. Namely, compared with the relevant art in which the ONU may be operated and processed merely when the ONU is online in a process of managing the ONU via the management channel, the embodiment does not have to ensure that the ONU is online, namely when the ONU is offline, the network management system can transmit the ONU data packet of the ONU to the OLT, and the ONU data packet can be transmitted by means of a basic structure between the OLT and the ONU as long as the ONU is detected later, thereby greatly improving the ONU management efficiency of the network management system.

When the OLT sends the received ONU data packet to the ONU, different operations can be executed according to different commands of the data packet. The following processing can be adopted: the OLT judges whether the received ONU data packet is a configuration command data packet for a configuration operation or a query command data packet for a query operation; when the ONU data packet is the configuration command data packet, the OLT stores the received configuration command data packet, and sends the configuration command data packet to the ONU; and/or, when the ONU data packet is the query command data packet, the OLT sends the query command data packet to the ONU. The operations are executed according to a difference between a configuration command and a query command respectively.

In an embodiment, a method for processing ONU data is also provided. Fig. 3 is a flowchart of a third method for processing ONU data according to an embodiment of the present disclosure. As shown in Fig. 3, the flow includes the steps as follows.

Step S302: An ONU receives an ONU data packet sent by an OLT, wherein the ONU data packet is sent by a network management system and used for processing the ONU.

Step S304: The ONU performs data processing according to the received ONU data packet.

For the ONU, the ONU data packet from the network management system is transparently transmitted by the OLT on the basis of a basic connection between the network management system and the OLT and a basic connection between the OLT and the ONU. Compared with the relevant art in which it is necessary to establish a specific management channel when the network management system manages the ONU, the method has the advantages that the problem in the relevant art that the management of the ONU is limited by certain factors, including a type factor, a state factor indicative of whether the ONU is online, and a version upgrade factor, is solved, thereby achieving the effect of performing data processing without needing to specially establish a relevant management channel between the network management system and the ONU, without needing to consider whether the ONU is online, and without needing to frequently upgrade the involved OLT.

Before the ONU performs data processing according to the received ONU data packet, the method further includes that: the ONU parses the received ONU data packet according to a pre-negotiation with the network management system; and the ONU performs data processing according to a parsing result when it is determined that the ONU data packet is parsed successfully. Compared with the relevant art in which it is necessary to establish a specific management channel involving the OLT when the network management system manages the ONU, the ONU can directly parse the ONU data packet according to the pre-negotiation with the network management system and can perform corresponding operation processing according to the parsing result by means of the processing, so that not only it is unnecessary to frequently upgrade the OLT, but also the ONU can be effectively managed regardless of an online state or an offline state.

When the ONU performs data processing according to the received ONU data packet, the following operations can be executed according to different received ONU data packets: for example, when an ONU data packet is received, the ONU judges whether the received ONU data packet is a configuration command data packet for a configuration operation or a query command data packet for a query operation; the ONU executes the configuration operation according to the configuration command data packet when the ONU data packet is the configuration command data packet; and/or, the ONU executes the query operation according to the query command data packet when the ONU data packet is the query command data packet.

Wherein, after the ONU performs data processing according to the received ONU data packet, the ONU can feed back configuration result information obtained by the execution of the configuration operation and/or query result information obtained by the execution of the query operation to the network management system, wherein the configuration result information and/or the query result information received from the ONU are transparently transmitted by the OLT to the network management system.

In an embodiment, a device for processing ONU data is also provided. The device is configured to realize the embodiment and an example implementation mode, and those which have been described are no longer described in detail. Just as a term 'componet' used below, the combination of software and/or hardware with predetermined functions can be realized. Although the device described by the following embodiment is better realized by the software, the realization of the hardware or the combination of the software and the hardware may be possible and may be constructed.

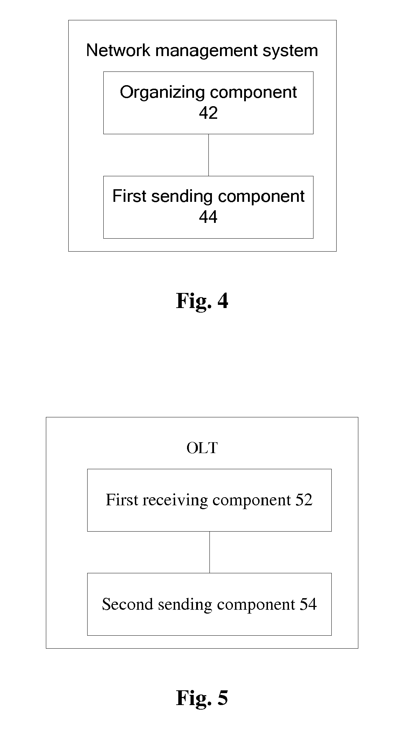

Fig. 4 is a structure diagram of a first device for processing ONU data according to an embodiment of the present disclosure. As shown in Fig. 4, the device is located in a network management system, includes a organizing component 42 and a first sending component 44, and is described below.

The organizing component 42 is configured to organize data used for processing an ONU into an ONU data packet; and the first sending component 44 is connected to the organizing component 42 and is configured to send the ONU data packet to an OLT, wherein the OLT sends the received ONU data packet to the ONU.

Fig. 5 is a structure diagram of a second device for processing ONU data according to an embodiment of the present disclosure. As shown in Fig. 5, the device is located in an OLT, includes a first receiving component 52 and a second sending component 54, and is described below.

The first receiving component 52 is configured to receive an ONU data packet sent by a network management system and used for processing an ONU; and the second sending component 54 is connected to the first receiving component 52 and is configured to send the received ONU data packet to the ONU.

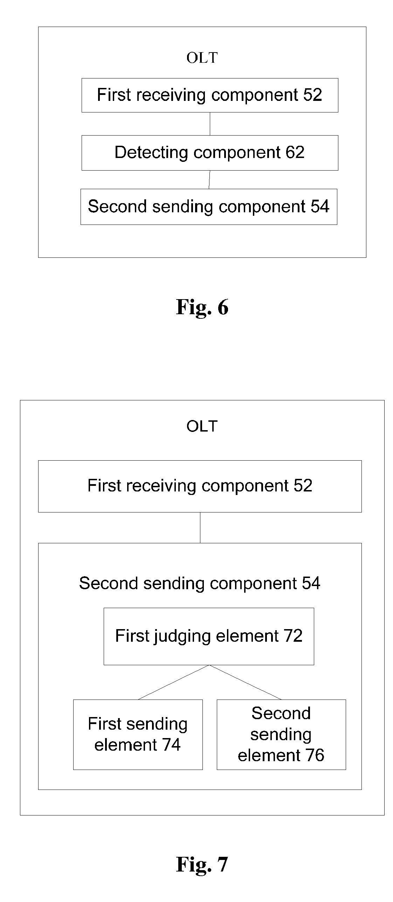

Fig. 6 is an example structure diagram of a second device for processing ONU data according to an embodiment of the present disclosure. As shown in Fig. 6, the device further includes a detecting component 62 in addition to all components shown in Fig. 5, and is described below.

The detecting component 62 is connected to the first receiving component 52 and the second sending component 54 and is configured to detect whether the ONU is online, and send the received ONU data packet to the ONU by the OLT when a detecting result is that the ONU is online.

Fig. 7 is an example structure diagram of the second sending component 54 in the second device for processing the ONU data according to an embodiment of the present disclosure. As shown in Fig. 7, the second sending component 54 includes a first judging element 72, a first sending element 74 and/or a second sending element 76, and is described below.

The first judging element 72 is configured to judge whether the received ONU data packet is a configuration command data packet for a configuration operation or a query command data packet for a query operation; the first sending element 74 is connected to the first judging element 72 and is configured to store the received configuration command data packet by the OLT and send the configuration command data packet to the ONU when the ONU data packet is the configuration command data packet; and/or, the second sending element 76 is connected to the first judging element 72 and is configured to send the query command data packet to the ONU by the OLT when the ONU data packet is the query command data packet.

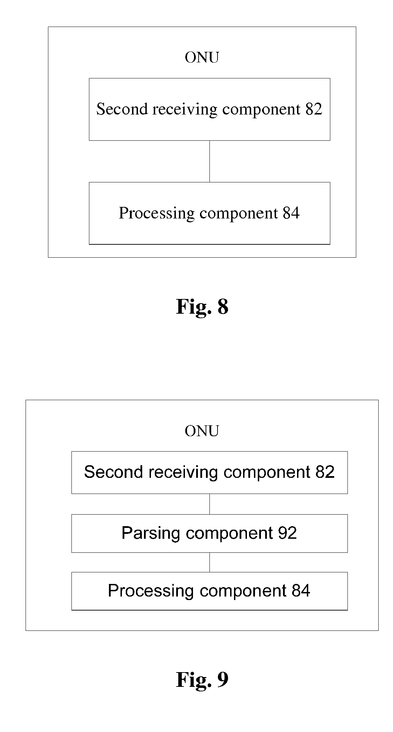

Fig. 8 is a structure diagram of a third device for processing ONU data according to an embodiment of the present disclosure. As shown in Fig. 8, the device is located in an ONU, includes a second receiving component 82 and a processing component 84, and is described below.

The second receiving component 82 is configured to receive an ONU data packet sent by an OLT, wherein the ONU data packet is sent by a network management system and used for processing the ONU; and the processing component 84 is connected to the second receiving component 82 and is configured to perform data processing according to the received ONU data packet.

Fig. 9 is a first example structure diagram of the third device for processing the ONU data according to an embodiment of the present disclosure. As show in Fig. 9, the device further includes a parsing component 92 in addition to all components shown in Fig. 8, and is described below.

The parsing component 92 is connected to the second receiving component 82 and the processing component 84, and is configured to parse the received ONU data packet according to a pre-negotiation with the network management system; and perform data processing by the ONU according to a parsing result when it is determined that the ONU data packet is parsed successfully.

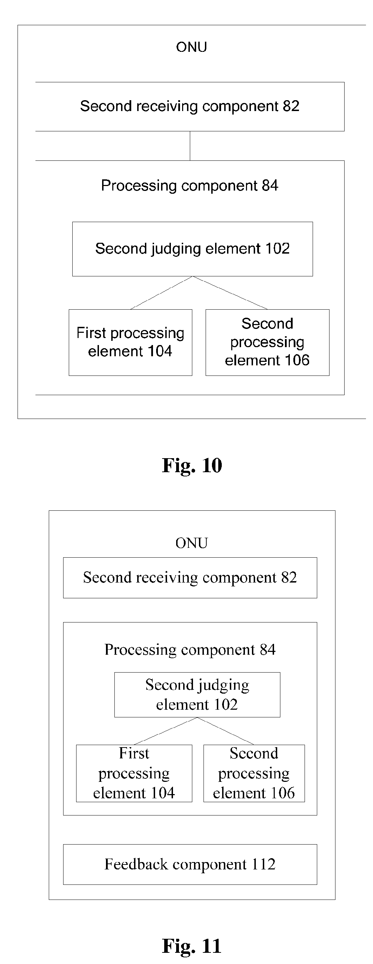

Fig. 10 is an example structure diagram of the processing component 84 in the third device for processing the ONU data according to an embodiment of the present disclosure. As shown in Fig. 10, the processing component 84 includes a second judging element 102, a first processing element 104 and/or a second processing element 106, and is described below.

The second judging element 102 is configured to judge whether the received ONU data packet is a configuration command data packet for a configuration operation or a query command data packet for a query operation; the first processing element 104 is connected to the second judging element 102 and is configured to execute the configuration operation according to the configuration command data packet when the ONU data packet is the configuration command data packet; and/or, the second processing element 106 is connected to the second judging element 102 and is configured to execute the query operation according to the query command data packet when the ONU data packet is the query command data packet.

Fig. 11 is a second example structure diagram of the third device for processing the ONU data according to an embodiment of the present disclosure. As shown in Fig. 11, the device further includes a feedback component 112 in addition to all components shown in Fig. 10, and the feedback component 112 is described below.

The feedback component 112 is connected to the processing component 84 and is configured to feed back configuration result information obtained by a execution of the configuration operation and/or query result information obtained by a execution of the query operation to the network management system, wherein the configuration result information and/or the query result information received from the ONU are transparently transmitted by the OLT to the network management system.

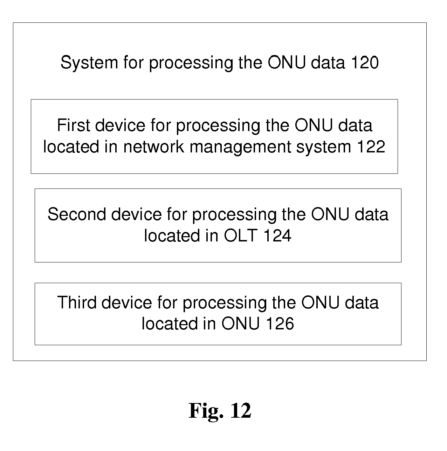

Fig. 12 is a structure diagram of a system for processing ONU data according to an embodiment of the present disclosure. As shown in Fig. 12, the system for processing the ONU data 120 includes: the first device for processing the ONU data 122 located in the network management system, the second device for processing the ONU data 124 located in the OLT according to any one of the above contents and the third device for processing the ONU data 126 located in the ONU according to any one of the above contents.

There is not an effective method for managing any type of ONU including an SFU and an MDU via the network management system no matter whether the ONU is online and completing a response to a new requirement on the ONU without needing to upgrade the version of the OLT in the relevant art. On the basis of the situations of the relevant art, the method for managing the ONU in a PON provided in an embodiment can be applied to an EPON or GPON network element device including an OLT and an ONU, and belongs to a method for remotely managing an ONU in a PON system using a network management system. The method is simply described below.

The method for remotely managing an ONU in a PON system substantially includes the steps as follows. A network management system organizes data of an managed ONU into a data packet and issues the data packet to an OLT; the OLT receives the data packet and saves the received data packet on the OLT; and the OLT will take charge of finally issuing the data packet to the ONU, wherein the data packet may be various types of data or data files. For example, the data may include a query command and a configuration command. It is important to note that the network management system may merely issue a query command data packet to an online ONU. In addition, after receiving the data packet sent by the OLT, the ONU parses contents of the data packet and executes the operation so as to complete a function of remotely managing the ONU by the network management system.

By means of the method for remotely managing the ONU by the network management system, an online or offline ONU can be remotely managed by the network management system without needing to establish a management channel between the network management system and the ONU. Meanwhile, new functions of the ONU can be managed without needing to upgrade the version of the OLT.

The example implementation mode of the present disclosure is described below with reference to the drawings.

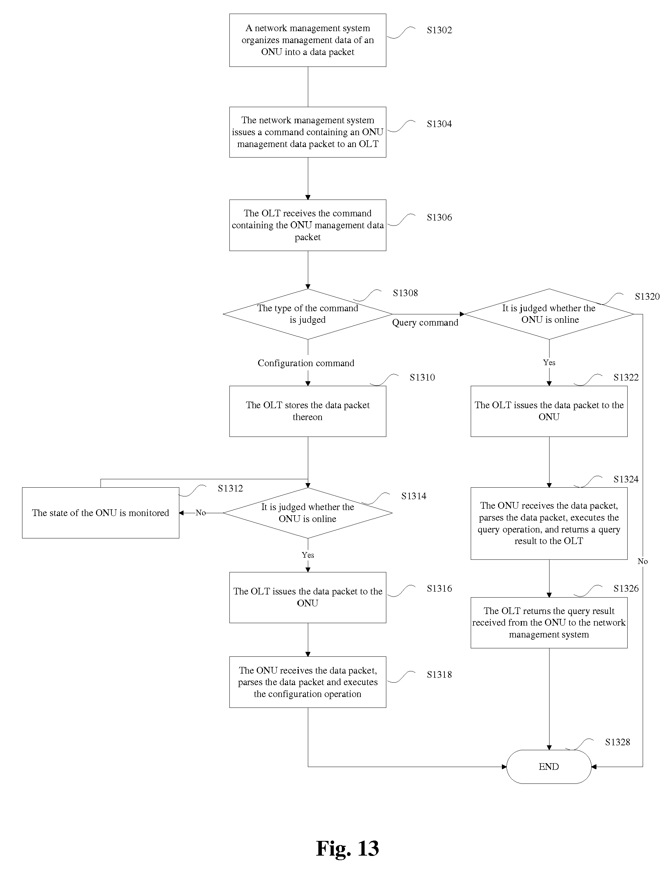

Fig. 13 is a flowchart of remote management of an ONU via a network management system according to an example implementation mode of the present disclosure. As shown in Fig. 13, the flow includes the steps as follows.

Step S1302: A network management system organizes management data of an ONU into a data packet.

Wherein, the form of the data packet is not limited, and the data packet may be a binary data packet, an ASCII data packet, a file or the like.

The management on the ONU by the network management system includes a query operation and a configuration operation. When the management is the query operation, the network management system will organize management information into a query command data packet. When the management is the configuration operation, the network management system will organize the management information into a configuration command data packet. In addition, the query command and the configuration command may be put into one data packet.

Step S1304: The network management system issues a command containing an ONU management data packet to an OLT.

For a configuration command, the network management system will issue the configuration command containing the ONU management data packet to the OLT; For a query command, the network management system may merely issue the query command containing the ONU management data packet for an online ONU to the OLT; and a data packet including the query command and the configuration command can be sent to the OLT.

Step S1306: The OLT receives the command containing the ONU management data packet, and namely the OLT will receive the command containing the ONU management data packet from the network management system.

Step S1308: The OLT judges the type of the command, when it is judged that the command is the configuration command, S1310 is executed, and when it is judged that the command is the query command, S1320 is executed.

The OLT will execute different processing operations according to different commands. When the command is the configuration command, S1310 is executed, and when the command is the query command, S1320 is executed. When it is unnecessary to distinguish the query command and the configuration command, Step S1310 may be executed.

Step S1310: The OLT stores the data packet thereon.

The OLT does not perform any parse processing on the data packet, and directly saves the data packet thereon.

Step S1312: The state of the ONU is monitored.

Step S1314: It is judged whether the ONU is online, when a judgement result is that the ONU is online, Step S1316 is executed, and otherwise, Step S1312 is returned.

Namely, the OLT will detect whether the ONU to be operated by the network management system is online, when the ONU is online, Step S1316 is executed, when the ONU is offline, Step S1312 is returned, and the OLT will continuously monitor the online situation of the ONU until the OLT finds that the ONU comes online.

Step S1316: The OLT issues the data packet to the ONU.

The OLT issues the data packet which is transmitted from the network management system and has been saved on the OLT to the ONU in a mode of remaining the data packet unchanged without any processing.

Step S1318: The ONU receives the data packet, parses the data packet and executes the configuration operation.

After receiving the data packet sent from the OLT, the ONU parses the data packet according to a protocol appointed with the network management system, executes the parsed command operation, and finally completes remote management of ONU configuration via the network management system, Step S1328 is executed, and processing is ended.

Step S1320: It is judged whether the ONU is online, when a judgement result is that the ONU is online, Step S1322 is executed, and otherwise, Step S1328 is executed.

The command received from the network management system by the OLT is the query command, when the ONU is online, Step S1322 is executed, and otherwise, processing is ended.

Step S1322: The OLT issues the data packet to the ONU.

The OLT issues the data packet which is transmitted from the network management system and contains ONU query information to the ONU in a mode of remaining the data packet unchanged without any processing.

Step S1324: The ONU receives the data packet, parses the data packet, executes the query operation, and returns a query result to the OLT.

After receiving the data packet which is sent from the OLT and contains the query information, the ONU parses the data packet according to a protocol appointed with the network management system, executes the query operation, and returns a query result to the OLT.

Step S1326: The OLT returns the query result received from the ONU to the network management system.

The OLT sends the data packet which is received from the ONU and contains the query result to the network management system in a mode of remaining the data packet unchanged, and the network management system parses a query result data packet according to a protocol appointed with the ONU, and then displays a result on an interface of the network management system.

Step S1328: Processing is ended.

Obviously, those skilled in the art should understand that all modules or all steps in the present disclosure can be realized by using a general calculation device, can be centralized on a single calculation device or can be distributed on a network composed of a plurality of calculation devices. Optionally, they can be realized by using executable program codes of the calculation devices. Thus, they can be stored in a storage device and executed by the calculation devices, the shown or described steps can be executed in a sequence different from this sequence under certain conditions, or they are manufactured into each integrated circuit module respectively, or a plurality of modules or steps therein are manufactured into a single integrated circuit module. Thus, the present disclosure is not limited to a combination of any specific hardware and software.

The above is only the preferred embodiments of the present disclosure, and is not intended to limit the present disclosure. There can be various modifications and variations in the present disclosure for those skilled in the art. Any modifications, equivalent replacements, improvements and the like within the spirit and principle of the present disclosure shall fall within the protection scope of the present disclosure.

### Industrial applicability

As above, the problem in the relevant art that the management of the ONU is limited by certain factors, including a type factor, a state factor indicative of whether the ONU is online, and a version upgrade factor, is solved, thereby achieving the effect of performing data processing without needing to specially establish a relevant management channel between the network management system and the ONU, without needing to consider whether the ONU is online, and without needing to frequently upgrade the involved OLT.

## Claims

1. A method for processing Optical Network Unit, ONU data, comprising:
organizing, by a network management system, data used for processing an ONU into an ONU data packet; and
sending, by the network management system, the ONU data packet to an Optical Line Terminal, OLT, wherein the OLT sends the received ONU data packet to the ONU.

2. The method as claimed in claim 1, wherein the ONU data packet comprises at least one of:
a configuration command data packet for a configuration operation, and a query command data packet for a query operation.

3. A method for processing Optical Network Unit, ONU, data, comprising:
receiving, by an Optical Line Terminal, OLT, an ONU data packet sent by a network management system and used for processing an ONU; and
sending, by the OLT, the received ONU data packet to the ONU.

4. The method as claimed in claim 3, wherein before sending, by the OLT, the received ONU data packet to the ONU, further comprising:
detecting, by the OLT, whether the ONU is online; and sending, by the OLT, the received ONU data packet to the ONU when a detecting result is that the ONU is online.

5. The method as claimed in claim 3 or 4, wherein sending, by the OLT, the received ONU data packet to the ONU comprises:
judging, by the OLT, whether the received ONU data packet is a configuration command data packet for a configuration operation or a query command data packet for a query operation;
when the ONU data packet is the configuration command data packet, storing, by the OLT, the received configuration command data packet, and sending, by the OLT, the configuration command data packet to the ONU; and/or, when the ONU data packet is the query command data packet, sending, by the OLT, the query command data packet to the ONU.

6. A method for processing Optical Network Unit, ONU, data, comprising:
receiving, by an ONU, an ONU data packet sent by an Optical Line Terminal, OLT, wherein the ONU data packet is sent by a network management system and used for processing the ONU; and
performing, by the ONU, data processing according to the received ONU data packet.

7. The method as claimed in claim 6, before performing, by the ONU, data processing according to the received ONU data packet, further comprising:
parsing, by the ONU, the received ONU data packet according to a pre-negotiation with the network management system; and performing, by the ONU, data processing according to a parsing result when it is determined that the ONU data packet is parsed successfully.

8. The method as claimed in claim 6, wherein performing, by the ONU, data processing according to the received ONU data packet comprises:
judging, by the ONU, whether the received ONU data packet is a configuration command data packet for a configuration operation or a query command data packet for a query operation;
executing, by the ONU, the configuration operation according to the configuration command data packet when the ONU data packet is the configuration command data packet; and/or, executing, by the ONU, the query operation according to the query command data packet when the ONU data packet is the query command data packet.

9. The method as claimed in claim 8, after performing, by the ONU, data processing according to the received ONU data packet, further comprising:
feeding back, by the ONU, configuration result information obtained by a execution of the configuration operation, and/or query result information obtained by a execution of the query operation to the network management system, wherein the configuration result information and/or the query result information received from the ONU are transparently transmitted by the OLT to the network management system.

10. A device for processing Optical Network Unit, ONU, data, located in a network management system, comprising:
a organizing component, configured to organize data used for processing an ONU into an ONU data packet; and
a first sending component, configured to send the ONU data packet to an Optical Line Terminal, OLT, wherein the OLT sends the received ONU data packet to the ONU.

11. A device for processing Optical Network Unit, ONU data, located in an Optical Line Terminal, OLT, comprising:
a first receiving component, configured to receive an ONU data packet sent by a network management system and used for processing an ONU; and
a second sending component, configured to send the received ONU data packet to the ONU.

12. The device as claimed in claim 11, further comprising:
a detecting component, configured to detect whether the ONU is online, and send the received ONU data packet to the ONU by the OLT when a detecting result is that the ONU is online.

13. The device as claimed in claim 11 or 12, wherein the second sending component comprises:
a first judging element, configured to judge whether the received ONU data packet is a configuration command data packet for a configuration operation or a query command data packet for a query operation;
a first sending element, configured to store the received configuration command data packet by the OLT and send the configuration command data packet to the ONU when the ONU data packet is the configuration command data packet; and/or, a second sending element, configured to send the query command data packet to the ONU by the OLT when the ONU data packet is the query command data packet.

14. A device for processing Optical Network Unit, ONU, data, located in an ONU, comprising:
a second receiving component, configured to receive an ONU data packet sent by an Optical Line Terminal, OLT, wherein the ONU data packet is sent by a network management system and used for processing the ONU; and
a processing component, configured to perform data processing according to the received ONU data packet.

15. The device as claimed in claim 14, further comprising:
a parsing component, configured to parse the received ONU data packet according to a pre-negotiation with the network management system; and perform data processing by the ONU according to a parsing result when it is determined that the ONU data packet is parsed successfully.

16. The device as claimed in claim 14, wherein the processing component comprises:
a second judging element, configured to judge whether the received ONU data packet is a configuration command data packet for a configuration operation or a query command data packet for a query operation;
a first processing element, configured to execute the configuration operation according to the configuration command data packet when the ONU data packet is the configuration command data packet; and/or, a second processing element, configured to execute the query operation according to the query command data packet when the ONU data packet is the query command data packet.

17. The device as claimed in claim 16, further comprising:
a feedback component, configured to feed back configuration result information obtained by a execution of the configuration operation, and/or query result information obtained by a execution of the query operation to the network management system, wherein the configuration result information and/or the query result information received from the ONU are transparently transmitted by the OLT to the network management system.

18. A system for processing Optical Network Unit, ONU data, comprising: the device for processing the ONU data located in the network management system as claimed in claim 10, the device for processing the ONU data located in the OLT as claimed in any one of claims 11 to 13 and the device for processing the ONU data located in the ONU as claimed in any one of claims 14 to 17.
